# EUROPÄISCHE PATENTSCHRIFT

(11) **EP 2 269 011 B1**
(45) Veröffentlichungstag und Bekanntmachung des Hinweises auf die Patenterteilung: **07.12.2016**
(21) Anmeldenummer: 09734184.6
(22) Anmeldetag: 20.02.2009
(51) Int. Cl.: G01F 1/66, G01N 29/22

(54) **ULTRASCHALL-MESSANORDNUNG**
ULTRASONIC MEASURING ARRANGEMENT
SYSTÈME DE MESURE ULTRASONORE

(30) Priorität: 21.04.2008 DE 102008019992
(43) Veröffentlichungstag der Anmeldung: 05.01.2011
(73) Patentinhaber: MIB GmbH Messtechnik und Industrieberatung, 79241 Ihringen (DE)
(72) Erfinder: WILL, Thomas, 79235 Vogtsburg (DE); DEUTSCHER, Martin, 79111 Freiburg (DE)
(74) Vertreter: Kunst, Manuel Nikolaus Johannes
(86) Internationale Anmeldenummer: PCT/EP2009/001245
(87) Internationale Veröffentlichungsnummer: WO 2009/129884

(56) Entgegenhaltungen:
- EP-A- 0 457 999
- EP-A- 1 413 858
- EP-A- 1 760 436
- WO-A-94/20822
- WO-A-2007/065557
- DE-A1- 4 330 363
- US-A- 5 716 038

## Beschreibung

Die Erfindung betrifft eine Ultraschall-Messanordnung zur Durchfluss-, Schallgeschwindigkeits-, Dichte-, Viskositäts- und/oder Temperaturmessung fließfähiger Medien, mit einem eine Messstrecke aufweisenden Messrohr, welches in einem Bereich eines Messgehäuses angeordnet ist, wobei die Ultraschall-Messanordnung zur Durchschallung der Messstrecke in und entgegen der Flussrichtung eines Mediums und zur Signalaufnahme mindestens zwei beabstandet angeordnete Ultraschall-Sendeampfängar als Sensoren aufweist. Dabei ist das Messrohr der Anordnung dichtungs- und nahtfrei ausgebildet und mit dem Messgehäuse dichtungs- und nahtfrei als einstückiges Gehäuseteil ausgebildet, und die Sensoren sind derart in Endbereichen des Messrohres angeordnet, dass der Schallweg mit der Flussrichtung des Mediums einen spitzen Winkel nicht verschwindenden Betrags einschließt. Außerdem betrifft die Erfindung ein Verfahren zur Herstellung einer solchen Ultraschall-Messanordnung.

Zur Etablierung einer gut durchschallbaren Messstrecke beim Einsatz von Ultraschall-Messanordnungen, insbesondere im Bereich der Durchflussmessung fließfähiger Medien, sind bereits verschiedene Konzepte zur Ausbildung von Messstrecken in Gehäusen bekannt. Für kleine Nenndurchmesser in der Größenordnung von bis zu etwa 25 mm sind hierfür durch die EP 0 088 235 und der EP 0 681 162 die U-Form, und anderweitig auch die Z-Form oder die doppelte Z-Form bekannt, wobei abhängig von Platzangebot und Einsatzform auch weitere, im Grunde beliebig komplizierte Formen von Messstrecken verwendet werden.

Alle erwähnten Messstrecken sind jeweils mit dem Nachteil behaftet, dass sie mit ihrem dem Messvorgang geschuldeten Profil aus produktionstechnischen Gründen notwendig mehrteilig herzustellen sind und die betreffenden Teile nachträglich mittels Nähte verursachenden Schweißungen oder über Dichtungen zu verbinden sind. Dieser Umstand bringt wiederum den Nachteil mit sich, dass zum einen die betreffenden Dichtungen undicht werden können und sich Kapillaren zwischen Gehäuse und Dichtung ausbilden können. Zum anderen kann eine Schweißstelle Poren, Einschlüsse oder sonstige Unregelmäßigkeiten aufweisen. In diese Schwachstellen kann sich das transportierte, zu messende Medium setzen, was gerade in der Lebensmittelbranche zu hygienischen Problemen führen kann. Ein weiteres Problem kann hierbei im Bereich Chemieindustrie auftreten, wenn Mediumsreste verbleiben, die z. B. beim Ausbau des Gerätes das Personal gefährden können.

Bei dem erwähnten geringen Nenndurchmesser sind weiter aus der DE 101 20 355, der DE 39 11 408, der DE 39 41 546 und der WO 2007/065557 beispielsweise Systeme bekannt, die mit Reflexion oder sogar Mehrfachreflexion arbeiten. Jede Reflexion schluckt jedoch einen Teil der eingestrahlten Schallenergie, so dass in diesen Fällen starke Sendesignale benötigt werden, die wiederum Probleme hinsichtlich elektromagnetischer Verträglichkeit mit sich bringen können, oder aber das Empfangssignal wird so schwach, dass es von dem immer vorhandenen, mit aufgezeichneten Rauschen nur noch schwer unterscheidbar ist und daher seitens der Messwerterfassung einen erhöhten Aufwand notwendig macht.

Es ist aus der DE 101 09 161 auch eine Messanordnung bekannt, bei welcher innerhalb eines Geräts mit großem Nenndurchmesser mittels einer Düse im Messrohr ein kleinerer Durchmesser sozusagen simuliert wird, indem durch die Düse die Strömung auf einen kleinen Bereich konzentriert wird. Solche Anordnungen haben jedoch eine fest vorgegebene Flussrichtung und können somit keine Rückflüsse messen.

Schließlich kennt man durch die US-A-5 716 038 eine Messanordnung mit mediumsberührten Sensoren, durch die EP-A-1 413 858 eine Messanordnung, bei welcher im wesentlichen quer zur Flussrichtung gemessen wird und durch die WO 94/20822 gleichfalls eine artverwandte Messanordnung.

Es besteht daher die Aufgabe, eine Ultraschall-Messanordnung zur Verfügung zu stellen, die einfach und günstig herzustellen ist und die bei kleinem Nenndurchmesser der Messstrecke die Nachteile nachträglicher zusammenzufassender Teile der Anordnung vermeidet und mit vertretbar hoher Sendeleistung ein direktes Durchschallen der Messstrecke gestattet.

Die Aufgabe wird gelöst durch eine Ultraschall-Messanordnung der eingangs genannten Art, bei welcher der Schallweg reflexionsfrei ausgebildet ist, wobei die Sensoren jeweils in einer Aufnahme untergebracht sind, welche in einem von dem Rand des Messrohres vorspringenden Bereich neben einer jeweiligen Öffnung gebildet ist. Das betreffende Messrohr der erfindungsgemäßen Ultraschall-Messanordnung kann also besonders einfach in einem einstufigen Spritzgussverfahren hergestellt werden und ist daher, insbesondere in seinem mediumsberührten Teil dichtungs- naht- und daher auch kapillarfrei. Mit dem reflexionsfrei ausgebildeten Schallweg gelingt mit der Ultraschall-Messanordnung eine problemlose, wenig fehlerbehaftete Messung von Durchflüssen.

Um die empfindlichen Sensoren der Ultraschall-Messanordnung nicht den Einflüssen der teilweise aggressiven zu messenden Medien auszusetzen, können vorteilhafterweise bei einer Ausführungsform der Ultraschall-Messanordnung die Sensoren in den Endbereichen des Messrohres hinsichtlich des Mediums berührungsfrei angeordnet sein.

Um eine Verringerung des bei der Messung mit Ultraschall immer zu beachtenden Problems des Körperschalls zu erreichen, werden zweckmäßigerweise möglichst kleine Ultraschallwandler als Sensoren eingesetzt. Dies wird durch eine Weiterbildung der erfindungsgemäßen Ultraschall-Messanordnung begünstigt, bei der sich der Querschnitt des Schallwegs über die Längserstreckung bei im wesentlichen gleichbleibender, von dem Medium durchströmter Fläche ändert. Hierbei wird bei zumindest annähernd gleicher Querschnittsfläche der Flüssigkeitskanal abgeflacht.

Eine in den Transportweg des zu messenden Mediums gut zu integrierende Ausführungsform kann darin bestehen, dass die Ultraschall-Messanordnung mit Anschlüssen versehen ist, die bezüglich einer in Gehäusemitte quer zur Längserstreckung des Gehäuseteils verlaufenden Spiegelebene symmetrisch angeordnet sind.

Eine die Anordnung von zusätzlichen Einrichtungen an der Messtrecke erleichternde Ausführungsform der Ultraschall-Messanordnung kann so vorgesehen sein, dass an dem Gehäuseteil ein Einbauraum, insbesondere mit einer dem Messrohr abgewandten Zugriffsöffnung, vorgesehen ist.

Die Sensoren der Ultraschall-Messanordnung müssen mit wenigstens einer Signalverarbeitungseinrichtung zur Erzeugung, Erfassung, Verarbeitung und/oder Weiterleitung der Ultraschallsignale verbunden sein. Für deren Anordnung eignet sich besonders eine zweckmäßige Weiterbildung, bei welcher das Gehäuseteil mit einem weiteren Gehäuseteil zusammengefügt einen insbesondere geschlossenen Bauraum bildet, in welchem die Anordnung einer Signalverarbeitungseinrichtung vorsehbar ist. Die Anordnung der Signalverarbeitungseinrichtung ist aber auch vollständig in dem weiteren Gehäuseteil, und damit von dem ersten trennbar, denkbar. Darüber hinaus können weitere Gehäuseteile zusätzlich an dem ersten angeordnet werden. Bei einer anderen Ausführung der Ultraschall-Messanordnung sind eine oder mehrere Signalverarbeitungseinrichtungen bereits in dem ersten Gehäuseteil anordenbar, welches hierfür öffenbar und verschließbar vorgesehen sein kann.

Besonders bevorzugt sind Ausführungsformen der Ultraschall-Messanordnung, welche die Anforderungen hinsichtlich Hygiene und Sicherheit bei Anwendungen in der Lebensmittel- und chemischen Industrie einhalten, weswegen insbesondere hierfür das Messrohr sowie das Messgehäuse bzw. dessen Teile aus einem Kunststoff, insbesondere einem lebensmitteltauglichen und/oder hochbeständigen Kunststoff, beispielsweise aus Polyethylen (PE) oder einem anderen Polyolefin oder einem geeigneten polymeren Fluorcarbon, wie etwa Perfluoralkoxy (PFA), vorgesehen sind.

Zur Fixierung der Ultraschall-Messanordnung, beispielweise an einem Tank oder im Laufe des Transportwegs des Mediums an geeigneter Stelle sind an dem Gehäuseteil zweckmäßigerweise Festlegemittel zur Fixierung desselben angeordnet, beispielweise mit Ösen oder Gewindelöchern versehene Gehäusevorsprünge.

Die oben genannte Aufgabe wird auch gelöst durch ein Verfahren zur Herstellung einer Ultraschall-Messanordnung, insbesondere einer vorstehend bereits beschriebenen Ultraschall-Messanordnung, welche zumindest die folgenden Verfahrensschritte umfasst:
i. Bereitstellen einer Gussform;
ii. Einlegen zweier Positivformen in die Gussform, welche mit je einer ihrer Flächen derart aneinander zu liegen kommen, dass sie sich zu dem Volumen des Messrohrs ergänzen;
iii. Einstufiger Gussvorgang, bei welchem das vollständige Messrohr inklusive der außerhalb des Messrohres angeordneten Aufnahmen zur Anordnung der Sensoren sowie der Anschlüsse der Anordnung dichtungs- und nahtfrei hergestellt wird wobei mit der Gussform im gleichen Gussvorgang ein weiteres Gehäuseteil, welches zur Signalerzeugung, Signalerfassung und Signalverarbeitung notwendige Einrichtungen aufnehmen kann und das an dem Messrohr einstückig dichtungs- und nahtfrei angeformt ist, hergestellt wird;
iv. Entformen der Gussform unter Entnahme des geformten einstückigen Gussteils (5).

Mit dieser Verfahrensweise wird in einem einzigen, besonders einfachen Herstellvorgang eine Ultraschall-Messanordnung zur Verfügung gestellt, die einen reflexionsfreien Schallweg aufweist und bei welcher insbesondere der mediumsberührte Teil der Ultraschall-Messanordnung frei von Kapillaren und Hohlräumen ist, wobei der kleine Nenndurchmesser der Messstrecke eine verhältnismäßig geringe Sendeleistung der Ultraschall-Sendeempfänger erlaubt und dabei ein direktes Durchschallen der Messstrecke gestattet.

Bei einer vorteilhaften Variante des Verfahrens sind die Positivformen identisch ausgebildet und berühren sich an einer Seitenfläche über den wesentlichen Teil ihrer Längserstreckung derart, dass durch ihren Abguss bereits das Messrohr der Anordnung gebildet wird. Auf diese Weise ist nur eine Ausformung einer Positivform zu entwerfen und dann mehrfach herzustellen, während darüber hinaus an der Gussform selbst nur noch die Messtrecke nicht direkt betreffende Bereiche des Gehäuseteils in der Formgebung zu berücksichtigen sind.

Um einer vorteilhaft zu durchschallenden Art der Messtrecke die Form vorzugeben, sind bei einer bevorzugten Variante des Verfahrens die Positivformen jeweils durch einen dornartigen Schieber gebildet, dessen Querschnitt sich mit zunehmender, in die Gussform ragender Länge verändert. Besonders bevorzugt bildet der Querschnitt der beiden nebeneinander liegenden Schieber im mittleren Bereich der Messtrecke eine Fläche mit beinahe parallel verlaufenden Seitenbereichen und abgerundeten Enden und weist dabei keine Eckbereiche auf.

Bei einer zweckmäßigen Weiterbildung des Verfahrens wird mit der Gussform im gleichen Gussvorgang ein weiteres Gehäuseteil hergestellt, insbesondere ein weiteres zur Anordnung an dem ersten Gehäuseteil vorgesehenes Gehäuseteil, welches etwa zur Signalerzeugung, -erfassung und -Verarbeitung notwendige Einrichtungen aufnehmen kann. Der Einbauraum für zusätzliche Einrichtungen an der Ultraschall-Messanordnung kann aber auch schon durch das erste Gehäuseteil gebildet sein.

Eine weitere Variante des erfindungsgemäßen Verfahrens kann darüber hinaus vorsehen, dass entweder die Sensoren bei der Herstellung des Gehäuseteils in dieses durch Einlegen in die Gussform vor dem Gussvorgang integriert sind oder an dem Gehäuseteil von außen zugängliche Aufnahmen zur nachträglichen Anordnung der Sensoren vorgesehen sind, so dass nach dem Gussvorgang entweder bereits die vollständige Messanordnung zur Verfügung steht oder diese noch um später ausgewählte Sensoren ergänzt wird.

Die Erfindung wird nachstehend anhand eines Ausführungsbeispiels in der Zeichnung näher erläutert. Es zeigen dabei in teilweise schematisierter Darstellung die
- Fig.1: eine perspektivische Ansicht einer erfindungsgemäßen, einstückigen Ultraschall-Messanordnung mit Schnitthilfen zur Visualisierung von Längs- und Querschnitten entlang des Schallwegs der Messtrecke;
- Fig.2: eine ebene Seitenansicht einer aus einem mittleren Bereich der Messstrecke entnommenen Schnitthilfe aus der Fig.1; und die
- Fig.3: eine Seitenansicht eines Längsschnittes durch das Messrohr der Ultraschall-Messanordnung aus der Fig.1.

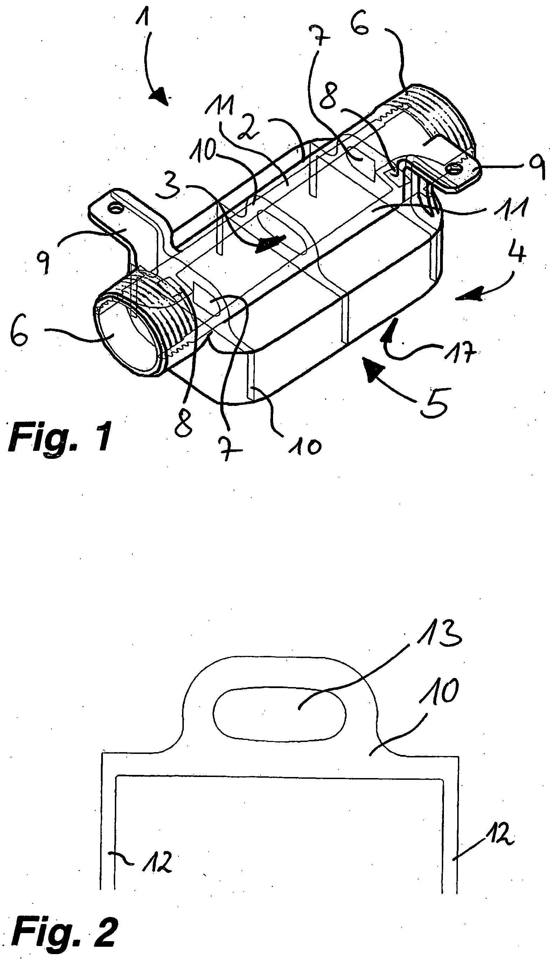

In der Fig.1 ist eine im Ganzen mit 1 bezeichnete Ultraschall-Messanordnung 1 zur Durchfluss-, Schallgeschwindigkeits-, Dichte-, Viskositäts- und/oder Temperaturmessung fließfähiger Medien erkennbar. Das Messrohr 2 der Ultraschall-Messanordnung weist eine Messstrecke 3 auf, und ist in einem Bereich eines Messgehäuses 4 angeordnet. Die Ultraschall-Messanordnung 1 weist weiter zur Durchschallung der Messstrecke 3 in und entgegen der Flussrichtung eines Mediums und zur Signalaufnahme mindestens zwei beabstandet angeordnete, nicht dargestellte Ultraschall-Sendeempfänger als Sensoren auf. Das Messrohr 2 ist hierbei selbst einstückig naht- und dichtungsfrei sowie mit dem Messgehäuse 4 dichtungs- und nahtfrei als einstückiges aus einem Kunststoff in einem Spritzgussvorgang hergestelltes Gehäuseteil 5 ausgebildet und der Schallweg schließt mit der Flussrichtung des Mediums einen spitzen, betragsmäßig von 0° verschiedenen Winkel ein.

Das Gehäuseteil 5 ist mit Anschlüssen 6 versehen, die den Zu- und Ablauf des zu transportierenden bzw. des zu messenden Mediums bilden. Diese Anschlüsse 6 sind bezüglich einer in Gehäusemitte quer zur Längserstreckung des Gehäuseteils 5 verlaufenden, nicht dargestellten Spiegelebene symmetrisch angeordnet. An den der Messstrecke 3 zugewandten Enden der Anschlüsse 6 befinden sich die beiden Öffnungen 7 des Messrohres 2, die einander diagonal gegenüberliegen. Neben den Öffnungen 7 sind jeweils Aufnahmen 8 zur von dem jeweiligen Medium unberührten Unterbringung jeweils eines Sensors zu erkennen. Die Aufnahmen 8 sind so benachbart zu den Öffnungen 8 des Messrohres 2 angeordnet, dass in der Messstrecke 3 ein diagonaler, reflexionsfreier Schallweg gebildet ist.

Das Gehäuseteil 5 der Ultraschall-Messanordnung 1 ist mit lediglich der Visualisierung dienenden Schnitthilfen 10, 11 dargestellt, von welchen die mittlere senkrecht stehende auch in der Fig.2 gezeigt ist. Diese Schnitthilfen 10, 11 stellen am Ort ihrer Anordnung einen Quer- bzw. Längsschnitt des Gehäuseteils 5 dar. Hierdurch ist erkennbar, dass das Gehäuseteil 5 auf der dem Betrachter abgewandten Seite ohne einen Boden ausgebildet ist und einen Einbauraum mit einer Zugriffsöffnung 17 aufweist. Ein Boden, beispielsweise als nicht dargestellter Deckel ausgebildet, kann nachträglich an dem für den Betrachter unteren Rand des Gehäuseteils 5 angeordnet, und dieses dadurch, beispielsweise nach Unterbringung einer Signalverarbeitungseinrichtung, verschlossen werden. Darüber hinaus zeigen die Schnitthilfen 10, 11 zusammen den Verlauf der Messstrecke 3 innerhalb des Messrohres 2 und erlauben es dem Betrachter den Schallweg des Ultraschalls zwischen den Sensoren und die Tatsache nachzuvollziehen, dass sich der Querschnitt des Schallwegs über die Längserstreckung der Messstrecke 3 bei im wesentlichen gleichbleibender, von dem Medium durchströmter Fläche ändert.

Schließlich ist in der Fig.1 zu erkennen, dass an der dem Betrachter zugewandten Oberseite des Gehäuseteils 5 zwei diagonal zueinander gegenüberliegend in den Endbereichen des Gehäuseteils 5 befindliche Festlegemittel 9 angeordnet sind, die als Vorsprünge mit Ösen oder Gewindelöchern ausgebildet sind.

Wie bereits erwähnt zeigt die Fig.2 die ebene Ansicht einer Schnitthilfe 10, wie sie im mittleren Bereich des Gehäuseteils 5 in der Fig.1 angeordnet ist und welche einen Schnitt durch das Kunststoffmaterial des Gehäuseteils 5 bildet. Zu erkennen sind dabei die stegartigen Ränder 12 des Gehäuseteils 5, die ein nach unten geöffnetes "U" bilden sowie im oberen Bereich eine von dem Material des Gehäuseteils umfasste, lochartige Öffnung, die den Querschnitt der Messstrecke 3 an diesem Ort zeigt. Hierbei erkennt man dass der Querschnitt der Messstrecke gegenüber demjenigen im Bereich der Öffnung 7 der Messstrecke 3 abgeflacht ist ohne dass sich die Querschnittfläche wesentlich geändert hätte.

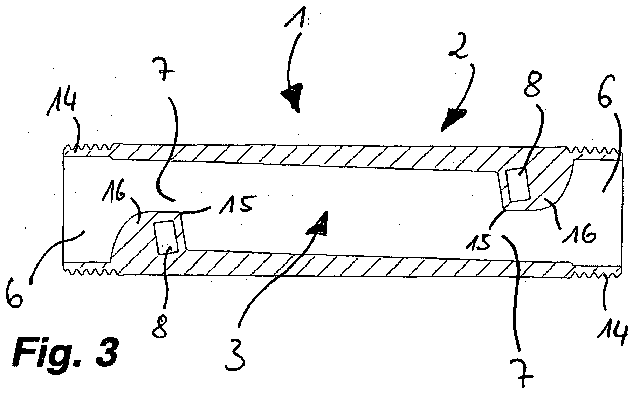

Die Fig.3 zeigt einen Längsschnitt durch die Messstrecke 3 der Ultraschall-Messanordnung 1. Ausgehend von mit Außengewinden 14 zum Anschluss von Zu- und Ableitung versehenen Anschlüssen 6 beginnt die Messtrecke 3 an Öffnungen 7 des Messrohres 2, die einander diagonal gegenüberliegen. Neben den Öffnungen 7 ist jeweils eine Aufnahme 8 zur Unterbringung eines Sensors erkennbar, die in einem von dem Rand des Messrohres 2 vorspringenden Bereich 16 gebildet ist. Diese Sensoren liegen sich dann ebenfalls diagonal gegenüber, so dass ein diagonaler und insbesondere auch reflexionsfreier Schallweg gebildet ist und der Schallweg mit der Längserstreckung des Messrohrs 2, aber auch mit der Flussrichtung des Mediums einen spitzen Winkel einschließt.

Durch die Darstellung der Fig.3 wird auch verdeutlicht, dass bei der Herstellung der Messtrecke 3 des Gehäuseteils 5, im wesentlichen das Aneinanderlegen zweier gleichgeformter, dornartiger Schieber in der Gussform ausreichend ist, wobei deren Berührungslinie zwischen den einander gegenüberliegenden Ecken 15 der vorspringenden Bereiche 16 im Bereich der Öffnungen der Messtrecke 3 verläuft.

Die vorstehend beschriebene Erfindung betrifft demnach eine Ultraschall-Messanordnung 1 zur Durchfluss-, Schallgeschwindigkeits-, Dichte-, Viskositäts- und/oder Temperaturmessung fließfähiger Medien, mit einem eine Messstrecke 3 aufweisenden Messrohr 2, welches in einem Bereich eines Messgehäuses 4 angeordnet ist, wobei die Ultraschall-Messanordnung zur Durchschallung der Messstrecke 3 in und entgegen der Flussrichtung eines Mediums und zur Signalaufnahme mindestens zwei beabstandet angeordnete Ultraschall-Sendeempfänger als Sensoren aufweist. Um eine Ultraschall-Messanordnung 1 zur Verfügung zu haben, die einfach und günstig herzustellen ist, einen kleinen Nenndurchmesser aufweist und mit möglichst geringer Sendeleistung ein direktes Durchschallen der Messstrecke 3 gestattet, wird vorgeschlagen, dass das Messrohr 2 der Anordnung 1 dichtungs- und nahtfrei ausgebildet ist und mit dem Messgehäuse 4 dichtungs- und nahtfrei als einstückiges Gehäuseteil 5 ausgebildet ist und dass die Sensoren derart in Endbereichen des Messrohres 2 angeordnet sind, dass der Schallweg mit der Flussrichtung des Mediums einen spitzen Winkel nicht verschwindenden Betrags einschließt, und dass der Schallweg reflexionsfrei ausgebildet ist, wobei die Sensoren jeweils in einer Aufnahme untergebracht sind, welche in einem von dem Rand des Messrohres vorspringenden Bereich neben einer jeweiligen Öffnung gebildet ist.

## Patentansprüche

1. Ultraschall-Messanordnung zur Durchfluss-, Schallgeschwindigkeits-, Dichte-, Viskositäts- und/oder Temperaturmessung fließfähiger Medien, mit einem eine Messstrecke aufweisenden Messrohr, welches in einem Bereich eines Messgehäuses angeordnet ist, wobei die Ultraschall-Messanordnung zur Durchschallung der Messstrecke in und entgegen der Flussrichtung eines Mediums und zur Signalaufnahme mindestens zwei beabstandet angeordnete Ultraschall-Sendeempfänger als Sensoren aufweist, wobei das Messrohr (2) der Anordnung (1) dichtungs- und nahtfrei ausgebildet ist und mit dem Messgehäuse (4) dichtungs- und nahtfrei als einstückiges Gehäuseteil (5) ausgebildet ist, und wobei die Sensoren derart in Endbereichen des Messrohres (2) angeordnet sind, dass der Schallweg mit der Flussrichtung des Mediums einen spitzen Winkel nicht verschwindenden Betrags einschließt, **dadurch gekennzeichnet, dass** der Schallweg reflexionsfrei ausgebildet ist, wobei die Sensoren jeweils in einer Aufnahme (8) untergebracht sind, welche in einem von dem Rand des Messrohres (2) vorspringenden Bereich (16) neben einer jeweiligen Öffnung (7) des Messrohres (2) gebildet ist.

2. Ultraschall-Messanordnung nach Anspruch 1, **dadurch gekennzeichnet, dass** die Sensoren in den Endbereichen des Messrohres (2) hinsichtlich des Mediums berührungsfrei angeordnet sind.

3. Ultraschall-Messanordnung nach einem der Ansprüche 1 oder 2, **dadurch gekennzeichnet, dass** sich der Querschnitt des Schallwegs über die Längserstreckung der Messstrecke (3) bei im wesentlichen gleichbleibender, von dem Medium durchströmter Fläche ändert.

4. Ultraschall-Messanordnung nach einem der Ansprüche 1 bis 3, **dadurch gekennzeichnet, dass** das Gehäuseteil (5) mit Anschlüssen (6) versehen ist, die bezüglich einer in Gehäusemitte quer zur Längserstreckung des Gehäuseteils (5) verlaufenden Spiegelebene symmetrisch angeordnet sind.

5. Ultraschall-Messanordnung nach einem der vorhergehenden Ansprüche, **dadurch gekennzeichnet, dass** an dem Gehäuseteil (5) ein Einbauraum, insbesondere mit einer dem Messrohr (2) abgewandten Zugriffsöffnung (17), vorgesehen ist.

6. Ultraschall-Messanordnung nach einem der vorhergehenden Ansprüche, **dadurch gekennzeichnet, dass** an dem Gehäuseteil (5) die Anordnung eines oder mehrerer weiterer Gehäuseteile vorgesehen ist.

7. Ultraschall-Messanordnung nach einem der vorhergehenden Ansprüche, **dadurch gekennzeichnet, dass** das Gehäuseteil (5) mit einem weiteren Gehäuseteil zusammengefügt einen insbesondere geschlossenen Bauraum bildet, in welchem die Anordnung einer Signalverarbeitungseinrichtung vorsehbar ist.

8. Ultraschall-Messanordnung nach einem der vorhergehenden Ansprüche, **dadurch gekennzeichnet, dass** das Gehäuseteil (5) bzw. die Gehäuseteile aus einem Kunststoff, insbesondere einem lebensmitteltauglichen und/oder hochbeständigen Kunststoff, beispielsweise aus Polyethylen (PE) oder einem anderen Polyolefin oder einem geeigneten polymeren Fluorcarbon, wie etwa Perfluoralkoxy (PFA), vorgesehen ist.

9. Ultraschall-Messanordnung nach einem der vorhergehenden Ansprüche, **dadurch gekennzeichnet, dass** an dem Gehäuseteil (5) Festlegemittel (9) zur Fixierung desselben angeordnet sind.

10. Verfahren zur Herstellung einer Ultraschall-Messanordnung (1) nach einem der vorhergehenden Ansprüche, **gekennzeichnet durch** zumindest die folgenden Verfahrensschritte:
i. Bereitstellen einer Gussform;
ii. Einlegen zweier Positivformen in die Gussform, welche mit je einer ihrer Flächen derart aneinander zu liegen kommen, dass sie sich zu dem Volumen des Messrohrs (2) ergänzen;
iii. Einstufiger Gussvorgang, bei welchem das vollständige Messrohr (2) inklusive der außerhalb des Messrohres (2) angeordneten Aufnahmen (8) zur Anordnung der Sensoren sowie der Anschlüsse (6) der Anordnung (1) dichtungs- und nahtfrei hergestellt wird, wobei mit der Gussform im gleichen Gussvorgang ein weiteres Gehäuseteil, welches zur Signalerzeugung, Signalerfassung und Signalverarbeitung notwendige Einrichtungen aufnehmen kann und das an dem Messrohr einstückig dichtungs- und nahtfrei angeformt ist, hergestellt wird;
iv. Entformen der Gussform unter Entnahme des geformten einstückigen Gussteils (5).

11. Verfahren nach Anspruch 10, **dadurch gekennzeichnet, dass** die Positivformen identisch ausgebildet sind und sich an einer ihrer Seitenflächen über den wesentlichen Teil ihrer Längserstreckung derart berühren, dass durch ihren Abguss das Messrohr (2) der Anordnung (1) gebildet wird.

12. Verfahren nach Anspruch 10 oder 11, **dadurch gekennzeichnet, dass** die Positivformen jeweils durch einen dornartigen Schieber gebildet sind, dessen Querschnitt sich mit zunehmender, in die Gussform ragender Länge verändert.

13. Verfahren nach einem der Ansprüche 10 bis 12, **dadurch gekennzeichnet, dass** die Sensoren bei der Herstellung des Gehäuseteils (5) in dieses durch Einlegen in die Gussform vor dem Gussvorgang integriert sind oder an dem Gehäuseteil (5) von außen zugängliche Aufnahmen (8) zur nachträglichen Anordnung der Sensoren vorgesehen sind.

## Claims

1. Ultrasonic measuring arrangement for flow, speed of sound, density, viscosity and/or temperature measurement of flowable media, having a measurement tube which comprises a measurement section and is arranged in a region of a measurement housing, wherein, for sound transmission of the measurement section in and contrary to the direction of flow of a medium and for receiving signals, the ultrasonic measurement arrangement comprises at least two mutually spaced ultrasonic transceivers as sensors, wherein the measurement tube (2) of the arrangement (1) is formed without seals and seams and is formed as a housing part (5) seallessly and seamlessly forming one piece with the measurement housing (4), and wherein the sensors are arranged in end regions of the measurement tube (2) such that the sound path forms a non-vanishing acute angle with the direction of flow of the medium, **characterised in that** the sound path is formed without reflections, wherein the sensors are each housed in a receptacle (8) which is formed in a region (16) protruding from the edge of the measurement tube (2) next to a respective opening (7) in the measurement tube (2).

2. Ultrasonic measuring arrangement as claimed in claim 1, **characterised in that** the sensors are disposed in the end regions of the measurement tube (2) so that they do not contact the medium.

3. Ultrasonic measuring arrangement as claimed in any one of claims 1 or 2, **characterised in that** the cross-section of the sound path changes over the longitudinal extension of the measurement section, with an essentially constant surface through which the medium flows.

4. Ultrasonic measuring arrangement as claimed in any one of claims 1 to 3, **characterised in that** the housing part (5) is provided with connections (6) which are arranged symmetrically with respect to a mirror plane extending in the housing middle transversely to the longitudinal extension of the housing part (5).

5. Ultrasonic measuring arrangement as claimed in any one of the preceding claims, **characterised in that** an installation space, in particular having an access opening (17) facing away from the measurement tube (2), is provided on the housing part (5).

6. Ultrasonic measuring arrangement as claimed in any one of the preceding claims, **characterised in that** one or a plurality of further housing parts is/are provided on the housing part (5).

7. Ultrasonic measuring arrangement as claimed in any one of the preceding claims, **characterised in that** the housing part (5), fitted together with a further housing part, forms in particular a closed construction space in which the arrangement of a signal processing device can be provided.

8. Ultrasonic measuring arrangement as claimed in any one of the preceding claims, **characterised in that** the housing part (5) or the housing parts made from a synthetic material, in particular a food-standard and/or highly resistant synthetic material, e.g. from polyethylene (PE) or another polyolefin or a suitable polymeric fluorocarbon such as perfluoroalkoxy (PFA), is/are provided.

9. Ultrasonic measuring arrangement as claimed in any one of the preceding claims, **characterised in that** fastening means (9) are disposed on the housing part (5) for fastening same.

10. Method for producing an ultrasonic measuring arrangement (1) as claimed in any one of the preceding claims, **characterised by** at least the following method steps:
i. providing a casting mould;
ii. inserting two positive forms into the casting mould, which come to lie against one another with a respective one of the surfaces thereof such that they complement each other to form the volume of the measurement tube (2);
iii. a one-step casting process, in which the complete measurement tube (2) including the receptacles (8) arranged outside the measurement tube (2) for arrangement of the sensors as well as the connections (6) of the arrangement (1) is produced without seals and seams, wherein a further housing part, which can hold devices required for signal generation, signal detection and signal processing and which is seallessly and seamlessly integrally formed as one piece on the measurement tube, is produced using the casting mould in the same casting process;
iv. demoulding the casting mould, thus removing the moulded one-piece cast part (5).

11. Method as claimed in claim 10, **characterised in that** the positive forms are identical and contact each other at one of the lateral surfaces thereof over the substantial part of the longitudinal extension thereof such that, by means of the pouring thereof, the measurement tube (2) of the arrangement (1) is formed.

12. Method as claimed in claim 10 or 11, **characterised in that** the positive forms are each formed by a mandrel-like pusher with a cross-section which changes as the length protruding into the casting mould increases.

13. Method as claimed in any one of claims 10 to 12, **characterised in that**, during production of the housing part (5), the sensors are integrated therein by insertion into the casting mould prior to the casting process or externally accessible receptacles (8) for subsequent arrangement of the sensors are provided on the housing part (5).

## Revendications

1. Système de mesure ultrasonore pour la mesure du débit, de la célérité du son, de la densité, de la viscosité et/ou de la température de milieux fluides, avec un tube de mesure présentant une zone de mesure, qui est disposé dans une région d'un boîtier de mesure, dans lequel le système de mesure ultrasonore présente comme détecteurs, pour l'examen aux ultrasons de la zone de mesure dans la direction d'écoulement d'un milieu et inversement et pour la réception de signaux, au moins deux émetteurs-récepteurs d'ultrasons espacés l'un de l'autre, dans lequel le tube de mesure (2) du système (1) est réalisé sans joints et sans soudures et il est réalisé comme partie de boîtier (5) en une seule pièce, sans joints et sans soudures, avec le boîtier de mesure (4) et dans lequel les détecteurs sont disposés dans les régions d'extrémité du tube de mesure (2), de telle manière que le chemin du son forme avec la direction d'écoulement du milieu un angle aigu d'une valeur non infiniment petite, **caractérisé en ce que** le chemin du son est réalisé sans réflexion, dans lequel les détecteurs sont installés respectivement dans un logement (8) qui est formé dans une région (16) en saillie sur le bord du tube de mesure (2) à côté de l'ouverture respective (7) du tube de mesure (2).

2. Système de mesure ultrasonore selon la revendication 1, **caractérisé en ce que** les détecteurs sont disposés dans les régions d'extrémité du tube de mesure (2) sans contact par rapport au milieu.

3. Système de mesure ultrasonore selon l'une des revendications 1 ou 2, **caractérisé en ce que** la section transversale du trajet sonore varie le long de l'axe du canal de mesure (3), la section transversale ayant une surface traversée par le liquide globalement constante.

4. Système de mesure ultrasonore selon l'une quelconque des revendications 1 à 3, **caractérisé en ce que** la partie de boîtier (5) est munie de raccords (6) qui sont disposés de façon symétrique par rapport à un plan de symétrie s'étendant au milieu du boîtier transversalement à l'extension longitudinale de la partie de boîtier (5).

5. Système de mesure ultrasonore selon l'une quelconque des revendications précédentes, **caractérisé en ce qu'**il est prévu sur la partie de boîtier (5) une chambre de montage, en particulier avec une ouverture d'accès (17) située à l'opposé du tube de mesure (2).

6. Système de mesure ultrasonore selon l'une quelconque des revendications précédentes, **caractérisé en ce qu'**il est prévu sur la partie de boîtier (5) l'agencement d'une ou de plusieurs autres parties de boîtier.

7. Système de mesure ultrasonore selon l'une quelconque des revendications précédentes, **caractérisé en ce que** la partie de boîtier (5) assemblée à une autre partie de boîtier forme une chambre de montage en particulier fermée, dans laquelle est prévu l'agencement d'un dispositif de traitement de signaux.

8. Système de mesure ultrasonore selon l'une quelconque des revendications précédentes, **caractérisé en ce que** la partie de boîtier (5) ou les parties de boîtier est/sont prévue(s) en une matière plastique, en particulier en une matière plastique de qualité alimentaire et/ou à haute résistance, par exemple en polyéthylène (PE) ou en une autre polyoléfine ou un polymère fluorocarboné approprié, comme par exemple le perfluoroalcoxy (PFA).

9. Système de mesure ultrasonore selon l'une quelconque des revendications précédentes, **caractérisé en ce que** des moyens de fixation (9) sont disposés sur la partie de boîtier (5) pour la fixation de celle-ci.

10. Procédé de fabrication d'un système de mesure ultrasonore (1) selon l'une quelconque des revendications précédentes, **caractérisé par** au moins les opérations suivantes :
i. préparation d'un moule de coulée ;
ii. pose de deux moules positifs dans le moule de coulée, qui doivent s'appliquer l'un contre l'autre par une de leurs faces, de telle manière qu'ils génèrent le volume du tube de mesure (2) ;
iii. processus de coulée en une étape, au cours duquel on fabrique le tube de mesure entier (2), y compris les logements (8) disposés à l'extérieur du tube de mesure (2) pour l'agencement des détecteurs ainsi que des raccords (6) du système sans joints et sans soudures, dans lequel on fabrique avec le moule de coulée, dans le même processus de coulée, une autre partie de boîtier qui peut contenir les équipements nécessaires pour la production de signaux, la détection de signaux et le traitement de signaux et qui est formée d'une seule pièce, sans joints et sans soudures, sur le tube de mesure ;
iv. démoulage du moule de coulée avec enlèvement de la pièce coulée (5) moulée d'une seule pièce.

11. Procédé selon la revendication 10, **caractérisé en ce que** les moules positifs sont de forme identique et se touchent sur une de leurs faces latérales sur une partie importante de leur extension longitudinale, de telle manière que le tube de mesure (2) du système (1) soit formé par leur produit moulé.

12. Procédé selon la revendication 10 ou 11, **caractérisé en ce que** les moules positifs sont respectivement formés par une pièce mobile en forme de tige, dont la section transversale varie avec l'augmentation de la longueur pénétrant dans le moule.

13. Procédé selon l'une quelconque des revendications 10 à 12, **caractérisé en ce que** les détecteurs sont intégrés dans la partie de boîtier (5), lors de la fabrication de celle-ci, en les disposant dans le moule de coulée avant le processus de coulée ou **en ce qu'**il est prévu sur la partie de boîtier (5) des logements (8) accessibles de l'extérieur pour l'agencement ultérieur des détecteurs.
